# EUROPEAN PATENT SPECIFICATION

(11) **EP 3 347 523 B1**
(45) Date of publication and mention of the grant of the patent: **10.06.2020**
(21) Application number: 16845248.0
(22) Date of filing: 11.09.2016
(51) Int. Cl.: E01C 9/00, A01G 13/02, E01C 5/00, E01C 5/20, E02B 11/00, E03F 1/00, E21F 17/16

(54) **TREE FRAME AND GRATE SYSTEM**
BAUMRAHMEN- UND ROSTSYSTEM
CADRE POUR ARBRE ET SYSTÈME DE GRILLE

(30) Priority: 11.09.2015 US 201562217224 P; 11.09.2015 US 201562217241 P
(43) Date of publication of application: 18.07.2018
(73) Proprietor: Iorio, Paul Anthony, Pawtucket, RI 02860 (US)
(72) Inventor: Iorio, Paul Anthony, Pawtucket, RI 02860 (US)
(74) Representative: Hanna Moore + Curley
(86) International application number: PCT/US2016/051205
(87) International publication number: WO 2017/044920

(56) References cited:
- WO-A1-2010/056234
- CH-A5- 674 034
- DE-A1-102004 001 919
- DE-U1- 8 710 209
- DE-U1- 9 014 587
- FR-B1- 2 743 581
- FR-B1- 2 743 581
- KR-B1- 100 934 447
- US-A- 4 019 279
- US-A- 4 308 688
- US-A- 5 806 966
- US-A- 5 849 069
- US-A1- 2009 084 601
- US-A1- 2009 084 601
- US-A1- 2011 147 303

## Description

### FIELD OF THE INVENTION

The application relates generally to a tree frame and grate system within primarily impervious surface areas such as sidewalks, street plantings, plazas, parking lots and the like. The design of this system and method would allow the tree to capture rainwater and surface runoff from adjoining impervious surfaces.

### BACKGROUND OF THE INVENTION

Vegetation planting within predominantly paved areas is typically completed as part of new construction such as street improvements, sidewalk and/or parking lot installations, plazas, promenades, or rehabilitation of existing infrastructure. When associated with city streets and public spaces, these collective improvements are sometimes referred to as "streetscapes." In these scenarios, trees are often incorporated to lend "greening" to an otherwise predominantly concrete or asphalt paved landscape. The addition of vegetation provides aesthetic appeal as well as shading and cooling from the hot sun, when trees are included.

During construction activities as part of these aforementioned infrastructure improvement activities, heavy earth moving equipment is necessary and relied upon to reshape and grade the land surface, as well as to install necessary utilities such as water, sewer, electricity, and other infrastructure. The continuous operation of equipment over the unpaved ground surface, causes severe compaction of existing soil.

During construction in many urban landscapes, buried rubble and debris from previous activities are often encountered. This debris, as well as any newly accumulated debris is typically left in place or buried at shallow depths. Once the infrastructure has been installed, and streets and sidewalks are paved and poured, new tree planting takes place, typically in predetermined and preserved exposed openings a/k/a tree pits, within newly poured sidewalks, or in small islands within a sea of impervious surface. The openings may be square, rectangular, or round in shape, with dimensions of typically less than 1,9 m² or 0,9m in diameter ( 20 square feet or three feet in diameter ) respectively, and usually contain the same compacted or otherwise unimproved soils as surrounding areas. These openings and dimensions are typically designed to accommodate the dimensions of a manufactured steel or cast iron frame and grate system to surround the vegetation providing both aesthetics and pedestrian protection from the open ground surface. If conventional frame and grate units are to be installed, forming and additional concrete pouring is required which could further impact the planting soils. Therefore, the design and installation of sidewalk systems is usually completed at the expense of creating and maintaining a healthy growing environment for plant systems. Consideration or provisions for the acclimation and health of the newly planted vegetation in these otherwise inhospitable environments are often sacrificed.

Paved (impervious) surfaces restrict the exchange of water, oxygen, and nutrients which normally takes place in non-impervious landscapes. These conditions are further compounded by the compaction of soil during construction activities which alters the structure of the soil particles removing air and water holding pockets within the aggregate complex. As mentioned previously, soil compaction is necessary to adequately support sidewalks and pavement, however, it interferes with the requirements of urban trees for sufficient rooting space to support healthy tree growth. Streetscapes which are often planted with street trees, are designed to withstand the compaction necessary for pavement stability for pedestrian and/or traffic loading, yet they may not provide ample rooting area vital to a tree's growth and survival, particularly if the soils are structurally poor or of limited areal dimension.

Roots are opportunistic and will seek out and grow where conditions provide adequate moisture (irrigation), nutrients, and equally important, oxygen. When roots extend beyond their initial planting holes they usually seek out soil areas of lesser compaction where moisture and oxygen levels are the greatest. In the urban environment, oftentimes, the greatest concentration of moisture and oxygen can be found in the aggregate matrix layer just below the base of a sidewalk slab or paved surface. These areas may include more porous sands and gravel commonly installed directly beneath pavement, or used with subsurface infrastructure such as utility lines to provide structural support. Consequently, vegetation roots may take up primary residence in this preferential layer. This layer often contains enough voids with moisture and oxygen to allow for preferential root growth, however, it may become excessively dry during periods of drought or little rainwater penetration. In addition, without sufficient rooting area beyond and below this layer, roots, particularly the roots of trees, may cause sidewalk failure in the form of cracking and uplifting. When this occurs, the roots are usually directly below the concrete slab of the sidewalk and may be the only area where moisture and air can be consistently available at levels conducive to root growth, particularly when the underlying layers are compacted to a level which usually prevents root penetration.

Because lack of "usable soil" for rooting space is arguably the most limiting factor affecting a street vegetations's water, oxygen, and nutrient demands over time, urban trees need to have access to non-compacted soil if they are to achieve the size, function, and benefits for which we desire them. Urban soil compaction generally occurs in what would be the vegetation's preferential rooting zone: the shallow lens of soil typically no greater than three feet deep and ideally extending beyond the tree's canopy. Compaction contributes to insufficient rooting volumes by increasing the soil's bulk density and soil strength to levels producing a tight aggregate with little porosity thus greatly reducing moisture and oxygen storage, factors which greatly restrict root growth.

While several reasons for densification and compaction of urban soils exist, the most common problem is the aforementioned compaction of the soil surrounding a street tree by heavy equipment to install and support pavement or nearby structures. Compaction is necessary as a cost-effective way to increase the strength and stability of existing soil materials to prevent their settlement under or around designed structures. It increases the bearing capacity of the materials below the pavement system and reduces the shrinking and swelling of soils that occurs with water movement or frost action. Therefore, efforts to increase the usable rooting area for street trees within primarily impervious environments, must account for the probability that compaction will take place as a necessity to safely design pavement systems,

Street vegetation in impervious settings in urbanized environments require a certain volume of soil to become established, grow healthy, and attain stature. Large trees in urban settings rarely, if ever, have sufficient soil volume to grow to their full potential size. Many models for predicting the volume of soil required for unrestricted growth have been proposed by the scientific and landscape communities. A reliable measure in many temperate regions is that each inch of the diameter of a tree trunk at approximately four and one half feet above the ground, requires about 1,9-2,3 m2 (20-25 ft2) of open ground with non-compacted soil. However, this amount of soil is rarely provided in the urban landscape. Trees do survive, but do not reach their expected size. A tree may establish and grow normally for several years, then, when there is no longer enough soil for the tree's increasing size, growth dramatically slows and the tree may be stunted and decline prematurely. Although a discussion of the prescribed volume of soil that is required by an urban tree is beyond the scope and intent of the present invention, suffice to say that the volume of usable soil is directly proportionate to its health and maturation. This is even more important in the acclimation and establishment of a newly planted tree.

Urban vegetation, an in particular "street trees," in areas with primarily impervious surrounding surfaces, are typically known to have higher mortality rates and lower average lifespans as compared to trees planted in the natural (less impervious) surfaces. Some botonists and urban foresters have reported that many city trees have an average lifespan of 7 years, compared to 32 years for suburban trees. A number of botanist agree that the average lifespan urban street trees is 13 years compared with 37 years for residential trees and 150 years for rural trees, however, a wider range of street tree lifespans has been reported from field-based studies. Trees along Boston, Massachusetts sidewalks, for instance, were estimated to have an average lifespan of approximately 10 years (Foster and Blaine, (1978), J Arboricul, 4(1):14-7) while the estimated average lifespan for urban trees in Baltimore, Maryland has been determined to be 15 years (Nowak et al., (2004), Urban For Urban Green, 2(3):139-47). Although different species and planting locations may be expected to have a range of tree lifespans, overall conclusions are that urban, city, and street trees typically have a much shorter lifespan and earlier mortality than their rural counterparts.

Earth formation and natural geology is non-selective: the soils that lie across and below the earth's surface are not of our design and are highly variable. Many native soils are severely compacted by nature, due to extensive quantities of clays, silts and other fine minerals which are held tightly and bind up and close potential voids thereby reducing moisture and oxygen holding capacity. From a plant growing standpoint, and that of soil nomenclature and classification, what is referred to as "sandy loam" is a soil class considered the most conducive to productive plant growth and root development. Sandy loam is a very open and porous soil, generous in voids which allow for moisture and oxygen storage, essential for the strong development of most plants. These soils are typically more resistant to compaction even under conditions of heavy construction loading and paving then those which are comprised of greater quantities of silt and clay.

The capacity to "engineer" soils allows us to create and blend a beneficial aggregate mix designed for structural loading and support, as well as providing the essential porosity for successful plant growth. These medias are primarily composed of coarse grained inorganic materials to allow for rapid infiltration, and lesser quantities of organic materials which retain water within the media to provide irrigation for plants. When both inorganic and organic constituents are blended in correct proportions, the resulting engineered media provides a proper balance of high infiltration capacity coupled with sufficient water holding capacity. Additionally, when the greater of the two proportions are comprised of aggregates of primarily well graded sand, structural loading to support pavement systems is enhanced and achieved.

Recent studies have determined that the incorporation of specific manufactured products or reconstituted rock-based materials formed by expanding specific minerals under intense heat, often referred to as "ceramics" into an engineered media, has the capacity to adsorb and/or absorb (sorption) nutrients commonly found in street runoff following a rain event. Sorption occurs as a chemical or physical bonding process where nutrients become "attached" to a material as it passes in aqueous solution. Excessive concentrations of specific nutrients such as nitrogen, phosphorus, and soluble metals are known to pollute soils and water bodies. However, lesser concentrations of both nitrogen and phosphorus (both essential nutrients for plant health and development) in stormwater that reaches a street tree could provide a valued benefit to the health and vigor of the tree if both are bioavailable, being utilized by the plant as a nutrient source.

Other manufactured products such as activated alumina and activated iron have shown a great affinity for the sorption of soluble phosphorus and other minerals in the aqueous stage. The incorporation of these materials in an engineered media have also shown to provide sorption sites to attract these nutrients, potentially rendering them bioavailable to the plant. Ceramics such as expanded shale and expanded clay have also shown a propensity for adsorbing minerals such as phosphorus and nitrogen. The mechanism for this sorption reaction is due mainly in part to the presence of tiny holes and fissures within the ceramic structure. These openings are the result of the artificially induced intense heating of the expanded rock during the manufacturing process that causes the material to "pop", and forming these openings.

Incorporating any of these manufactured products including, activated alumina, activated iron, or reconstituted rock at no greater than 50% (±5%) by volume with a sand aggregate at no less than 50% (±5) by volume would be expected to provide a nutrient benefit to the plant, as well as enhanced structural support for pavement systems.

In the past 20 years, manufactured products have emerged designed to support pavement systems while reducing the potential for soil compaction in support of street trees. Commercially available products currently exist such as open cell plastic modular chambers that lessen the effects of severe compaction. These chambers have a lattice structure which provides load bearing capabilities and support for soils, thereby resisting the occurrence of compaction. The chambers are typically of smaller dimension (less than 5 square feet), and are designed to be integrated or stackable in multiple units both vertically and horizontally, primarily encompassing the tree's root zone. They do provide benefit in reducing the potential for soil compaction as well as structural support for overlying pavement, however, they present a significant cost in both materials and labor in installation, particularly if new soils are necessary in the reconstruction process.

What are referred to as "structural soils" which are engineered to provide greater porosity and structural support, were also developed over the last two decades and are commercially available. They are formulated with a combination of large particle stone and fine clays with the inclusion of polymers to provide aggregate adhesion and also water holding capabilities. Due to the large particle stone matrix, structural soils provide a tremendous advantage in increasing soil porosity, and therefore, water storage and availability. However, due to the large open spaces between the stone particles, these soils tend to readily drain and dry out faster than other soils (both natural and engineered) particularly if the underlying layers of native soils also infiltrate at a rapid rate. During intervening dry periods between rain events, plant roots may suffer due to moisture drought. Due to this potential for greater soil drying and desiccation, particularly in close proximity to the open and exposed area near the base of the tree, structural soils are often recommended to be primarily utilized a distance away from the plant center or trunk of a tree.

Patent specification KR 100 934 447 describes an apparatus for promoting the growth of roadside trees, by supplying water and nutrients to the tree, and providing a protective cover on the trees, which are planted in concrete roadsides. Patent specification WO 2010/056234 describes ground cover rubber protective mats for trees and plants, outdoor areas. Patent specification US 5 806 966 describes an illuminated tree grate to create a lighting effect for providing safety, security and potentially advertising. Patent specification US 4 308 688 describes protective covers for the base of trees.

A need exists for a preformed frame and grate system and engineered media for the purpose of encouraging healthy and abundant root growth and permitting optimal development and growth of a tree or other plant material within an urban or otherwise primarily paved environment. It would also be desirable if a potential system could integrate with standard manufactured tree grates that currently exist. Tree frame and grate products such as those manufactured by Neenah Foundry (Neenah, WI) are typically comprised of stand-alone metal-based components solely intended to be set in place at the time of pavement construction and the pouring of concrete. Unless specifically instructed in a project construction plan, soils are not typically improved prior to tree installation and are similarly compacted and/or may contain construction material or urban fill as adjacent soils. A hole is dug which approximates or is somewhat larger than the dimensions of the tree's root ball (typically less the 12 square feet), the tree is then planted in these tree pits. Since the elevation of these conventionally planted trees are at the same elevation of the sidewalk surface or slightly less, their roots are susceptible to migrating horizontally and just below the base of the sidewalk particularly if porous sand or gravel was used as a substrate to support the pavement. If this takes place, over time, sidewalk upheaval may occur. In addition, if the soil surface in these tree pits is at equal elevation as the surrounding pavement they would not have the opportunity to capture additional rainwater runoff from the adjacent pavement.

Several advantages to the present invention as to be detailed in the following description are designed to rectify the perceived deficiencies in current tree growing systems inhighly impervious areas, as well as provide additional benefit. Some of these advantages include healthier tree growth, root redirection to minimize pavement upheaval, rainwater runoff capture, and versatility in the integration of tree grates. These and other advantages will become apparent from a consideration of the following description and accompanying drawings.

### BRIEF SUM MARY OF THE INVENTION

The present invention is directed to a tree frame and grate system as defined in claim 1. The system is designed to encourage to collection and retention of rainwater, particularly in an arid environment, so as to provide continuous irrigation of vegetation whilst providing easy installation and attachment of electric devices. The system is also designed to maximize the amount of water available to vegetation in a primarily paved environment. The system is comprised of a pre-formed supporting frame to contain an engineered growing media and plant material which may extend beyond the exterior of the supporting frame.

Another embodiment of the invention is directed to an engineered media formulated to promote healthy growth of the plant material and resist compaction from overlying pavement.

Also discloses but not claimed is a method for extending the life-span of vegetation by promoting abundant root growth, in particular, encouraging the development and growth of a tree or other plant material within an urban or otherwise primarily paved environment.

In another embodiment, a tree frame and grate system supporting a customized grate or other partial enclosure, is provided.

The invention is directed to a tree frame and grate system adapted for electrical service connection for aesthetic lighting, background sound and the like, and provides in further aspects a piping to provide supplement irrigation.

### BRIEF DESCRIPTION OF THE DRAWINGS

FIG. **1** is a cutaway perspective view of a tree frame and grate system of the present invention;
FIG. **2**(*a*) and **2**(*b*) is a cutaway perspective view and a cutaway cross sectional view respectively, of an embodiment of the tree frame and grate system of the present invention;
FlG. **3** is a cutaway perspective view of a second embodiment of the present invention;
FIG. **4** is a cutaway perspective view of a third embodiment of the present invention;
FIG. **5**(*a*), **5**(*b*), **5**(*d*), and **5**(*d*) are plan view renderings of some of the many design configurations of the present invention;
FIG. **6** is a cutaway perspective view of a fourth embodiment of the present invention;
FIG. **7**(*a*), **7**(*b*), **7**(*c*), and **7**(*d*) are plan view renderings of representations of various dimensions of organic and non-organic aggregate particles;
FIG. **8** is an image of a ceramic product with a plethora of interstitial openings.

These renderings and images are included for illustrative and interpretive purposes relative to specific embodiments and applications and should not be construed as the sole positioning, configurations, or singular use of the present invention.

### DETAILED DESCRIPTION OF THE INVENTION

### Definitions

The following terms are defined to aid the reader in fully understanding the operation, function, and utility of the present invention.

"±5%" as used herein, refers to the possibility that the stated amount may vary by 5%. For instance, 100 ±5%, indicates that the claimed value may range from 95 to 105.

"And/or" as used herein, refers to the possibility that both items or one or the other are claimed. For instance, A and/or B refers to the possibility of A only, B only or both A and B are present in the claimed invention.

"Aggregate" as used herein, refers to a sum, mass, or assemblage of various loose particles of inorganic and/or organic matter of various size and dimension. Furthermore, an "aggregate matrix layer" would represent a distinct or discreet layer of the sum of one or more aggregates.

"ASTM" as used herein, refers to American Society for Testing Materials.

"Bioavailable" as used herein, refers to the extent to which a nutrient or other substance is taken up by a plant's root system to be metabolized and therefore provide growth enhancement to the plant, (e.g., nitrogen, phosphorus, fertilizer, etc.).

"Bulk density" as used herein, is the weight of aggregates in a given volume. Aggregates with greater bulk densities tend to restrict root growth when compacted, particularly in greater concentrations of finer particles are present.

"Canopy" as used herein with respect to trees, refers to the extent of the outer layer of leaves of an individual tree or group of trees.

"Engineered media" as used herein, refers to a growing media specifically formulated, blended, and designed to provide enhanced growing characteristics such as moisture and oxygen retention, nutrient sorption, infiltration capacity, and other attributes to enable the plant material to reach its fullest potential for establishment and growth.

"Impervious/impermeable" as used herein, collectively are terms to describe surfaces that are mainly artificial structures-such as pavements (roads, sidewalks, driveways and parking lots) that are covered by impenetrable materials such as asphalt, concrete, brick, stone. Compacted soils may also be termed, impervious or impermeable.

"Notch" as used herein, is a slightly lower level or recessed surface within the top sidewall of the frame of the present invention which allows for the setting and support of a grate or plate while maintaining equal elevation of both the top surface of the grate or plate and the surface of the top sidewall.

"Porosity" as used herein, refers to the quantity of pores, or open space between aggregate particles. Pore spaces may be a function of the size and shape of various aggregate particles, and how they integrate or connect as a mass, or can be formed or expanded due to the movement of roots. The differences in the size and shape of the aggregates influence the way they fit together, and thus their porosity.

"Plants" or "vegetation" as used herein, is a collective term for a living organism of the kind exemplified by trees, shrubs, herbs, grasses, ferns, and mosses, typically growing in a permanent site, absorbing water, oxygen, and nutrients through its roots.

"Sorption" as used herein, is a collective term for both absorption and adsorption considered as a single process.

"Streetscape" as used herein, refers to the visual elements of a street, including the road, adjoining buildings, sidewalks, street furniture, trees and open spaces, etc., that combine to form the street's character.

"Sump" as used herein, refers to a pit or hollow in which liquid collects.

"Tree pits" as used herein, refers to the hole in the ground in which a tree is planted. In the urban context, the pit may represent the areal dimension of open non-impervious space within an otherwise impervious pavement surface.

"Urban" as used herein, relates to, or is characteristic of a city or town particularly that where the ground surface is primarily paved and impervious.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

Also, use of the "a" or "an" are employed to describe elements and components of the invention. This is done merely for convenience and to give a general sense of the invention. This description should be read to include one or at least one and the singular also includes the plural unless it is obvious that it is meant otherwise.

Reference throughout this specification to "plant(s)"; "tree(s)", "vegetation", or "roots" is used. One skilled in the art will recognize that embodiments of the invention should not be limited to these terms and that the terms herein are interchangeable or in general association for any tree, plant, root, or other vegetation that would benefit from the described invention.

The present disclosure comprises a tree frame and grate system whereby plant material such as trees can better survive and thrive in a primarily impervious surface environment. More particularly, the invention is intended to allow for the flexibility in utilizing multiple shapes and dimensions of manufactured tree grates. Attention is also given to a system which is comprised of an engineered media that provides greater moisture holding capacity and nutrient sorption, while providing structural support for pavement systems.

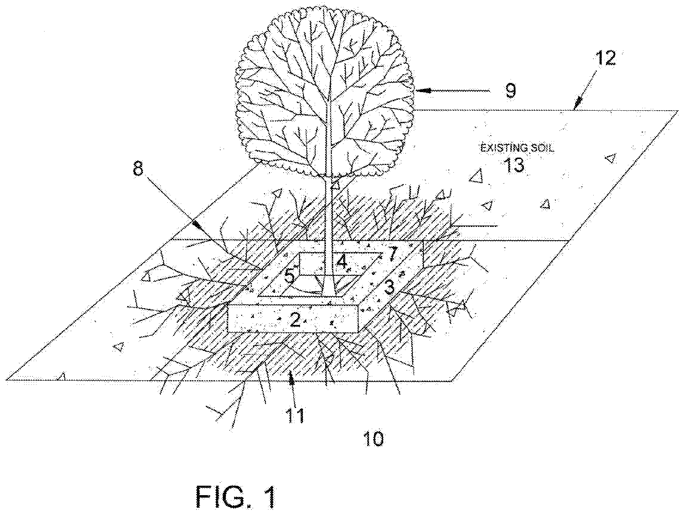

Referring now to the drawings, and specifically to FIG. **1**, a tree frame and grate system **10** of the present invention is comprised of a concrete, metal, plastic frame or other primarily impermeable substance fabrication with four connecting vertical side walls **2, 3, 4, 5,** of various height and enclosure which conform to form a horizontal top sidewall **7**, at least partially open to the environment with a corresponding open bottom. The exterior side walls of the frame are anticipated to be in partial or full communication with surrounding paved or primarily impervious surfaces.

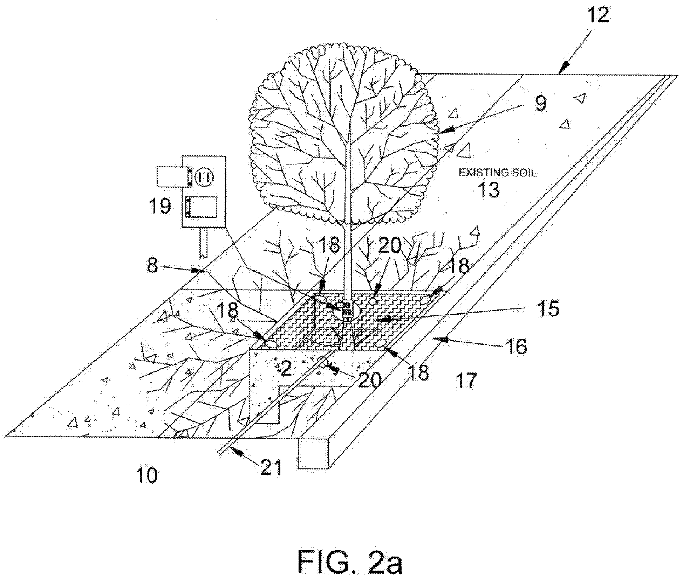

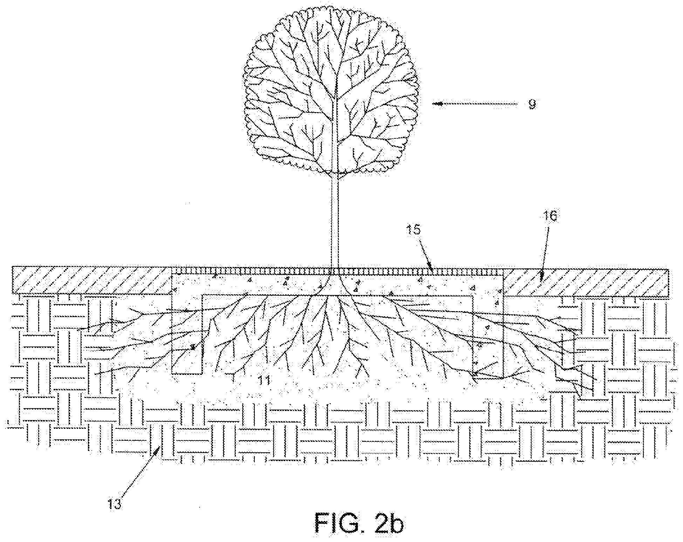

While continuing to reference FIG **1**, and also FIG **2*a-*2*b***, the frame encloses a mixture and/or discreet layer(s) of both organic and inorganic materials (media) **11**. A preferred embodiment would be that the media would be engineered and blended in proportions that would allow for structural support of the adjoining pavement **12**, and provide sufficient moisture and oxygen storage capabilities to provide for healthy tree growth. The media within the frame's enclosure may reside at various depths and elevation below the adjacent paved or primarily impervious surface **12** thereby forming a sump within the interior of the frame allowing for the collection of rainwater emanating from the surrounding surface pavement, providing additional irrigation for the plant material. The media may or may not extend beyond the outside perimeter of the frame. The varying dimensions and heights of the vertical sidewalls **2, 3, 4, 5** allows for the redirecting of tree roots in both vertical and horizontal direction to minimize potential sidewalk upheaval and/or encountering subsurface utilities at shallow depths. The frame maintains vegetative plant(s) **9** whose roots **8** are resident in the media and are able to communicate unrestricted with the surrounding introduced or existing soils **13.** The present invention comprises a grate or plate **15** preferably fabricated of metal, plastic, or the like at least partially enclosing the top surface of the frame while allowing for the full expression of any plant material. This enclosure may reside on top of the frame surface forming a near seamless transition with the surrounding pavement, within a notched ledge, suspended upon supporting beams affixed to the interior of the frame, or upon lateral cross members. The frame may integrate with or otherwise be connected to curbing **16** associated with an adjoining paved street **17**. The system of the invention foresees to install and connect electrical outlets **19** and optionally lighting fixtures 18 or otherwise point(s) of electric power service to provide lighting, ambient sound and other accents for the plant material, **9**, particularly if the system was installed in a promenade or in close proximity to a store front, or other location where such accents were deemed desirable or necessary. This embodiment also includes waterproof conduits in which the electrical elements are contained. The conduits should be embedded into one or more walls of the present invention. One or more conduits will allow for access to the electrical source so that the aesthetic electrical device may be connected to the electrical power source and be installed into the surface of the grate or frame or onto the vegetation growing out of the system. A series of conduits can be installed to provide electrical power to the system from a remote power source such as an electrical outlet in a commercial building or domicile. Means to secure the installed electrical outlets installed into the system, such as a lock box or other security device, are also foreseen according to the invention. Still another embodiment would include holes or ports **20** within one or more sides **2, 3, 4, 5** of the frame to allow for the installation of tubing or piping **21** to provide supplemental irrigation to the plant material.

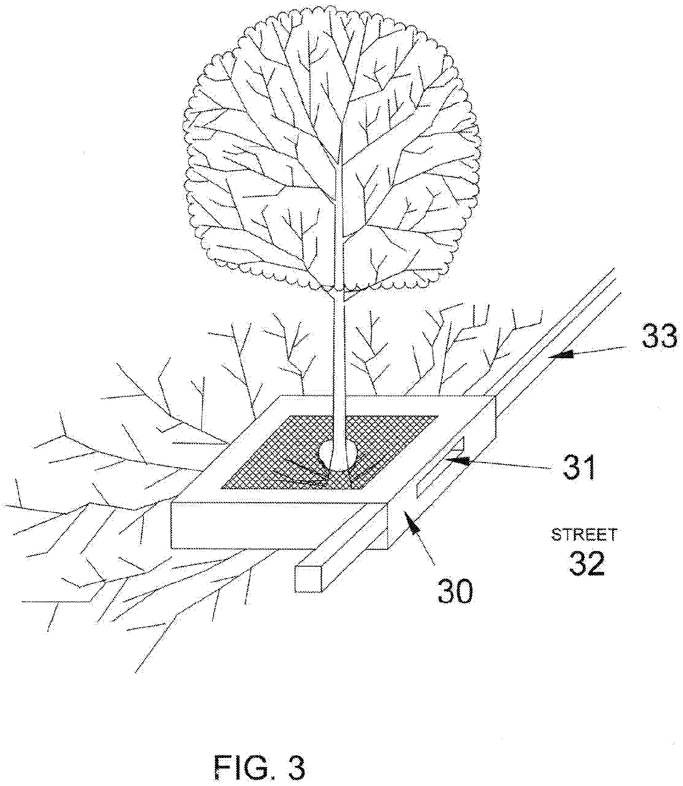

Referring now to FIG **3**, which depicts another embodiment of the present invention that incorporates a throat or opening **31** in one or more side walls **30** of the frame to allow for the collection of rainwater runoff emanating from adjacent paved surfaces, such as a street **32.** The frame may integrate with and form an extension of a street curb **33**, or abut the curbing.

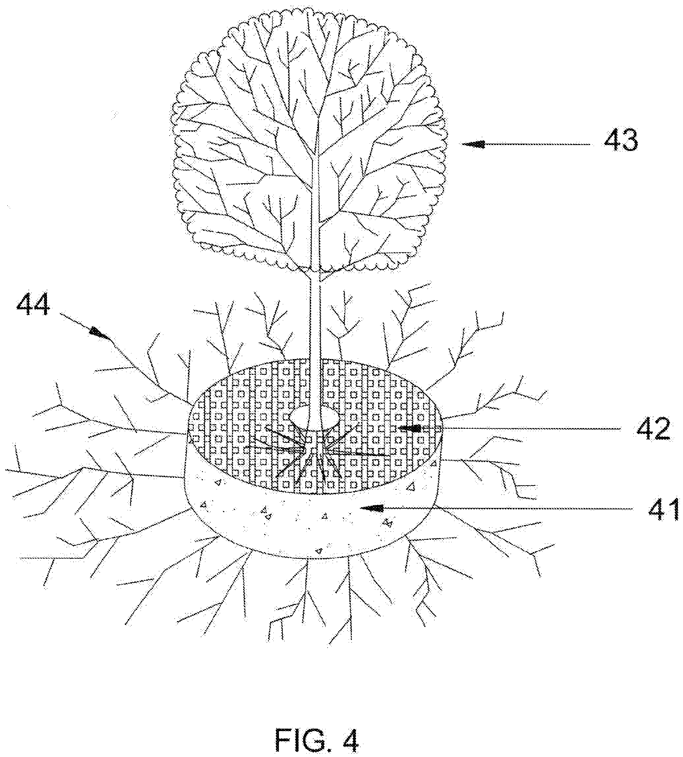

Now referring to FIG. **4**, another embodiment of the invention would be that the frame **41** would be of a round configuration of varying height with a round grate or plate **42** fabricated of metal, plastic, or the like that at least partially encloses the top surface of the frame **41** while allowing for the full expression of any plant material **43** and associated roots **44** as similarly identified in FIGS. **1**, **2*a-*2*b****.*

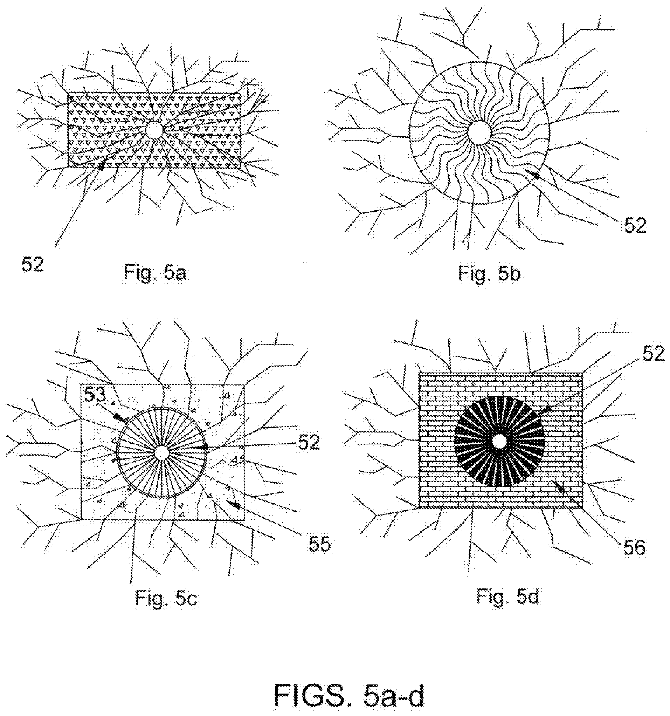

FIGS. **5*a-d*** illustrate some of the multiple design and configuration options and applications of the present invention. Referring specifically now to FIGS. **5*a-*5*b***, the combined frame/grate or plate **52** may fully cover the top surface of the frame, and be of similar shape and dimension. FIG. **5*****c*** depicts how the grate or plate **52** may be positioned in a recessed area (notch) **53** within the frame **55**. It is preferred that the notched area would accept the grate or plate so as to maintain a similar or contiguous elevation with the top surface of the frame **55**. FIG. **5*****d*** depicts how the top surface of the combined frame/grate or plate **52** would be sufficiently recessed as to allow for paving stones (pavers) **56** or other component materials to reside so as to maintain a similar or contiguous elevation with the top surface of the associated frame/grate or plate.

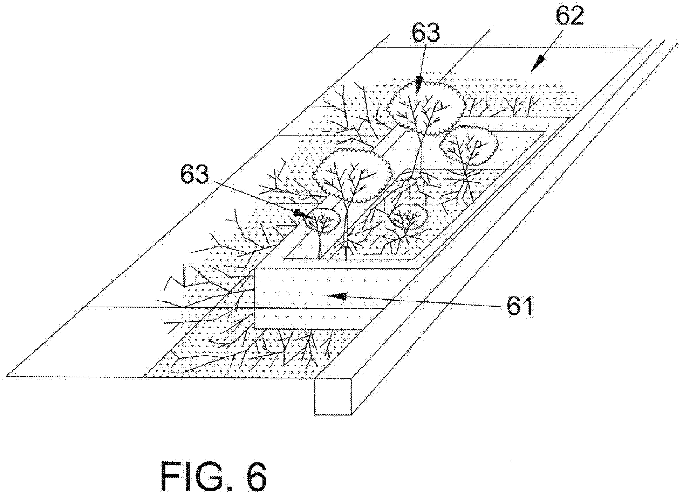

Referring now to FIG **6** which depicts another embodiment of a plant frame **61** within a sidewalk **62** or similar primarily impervious surface and whereby one or more plants **63** may be used. The frame would have various shapes and dimensions, and vertical sidewalls of varying heights as depicted in FIGS. **1***a*, **2***a****-*2***b* of the present invention. This embodiment also includes a grate or plate.

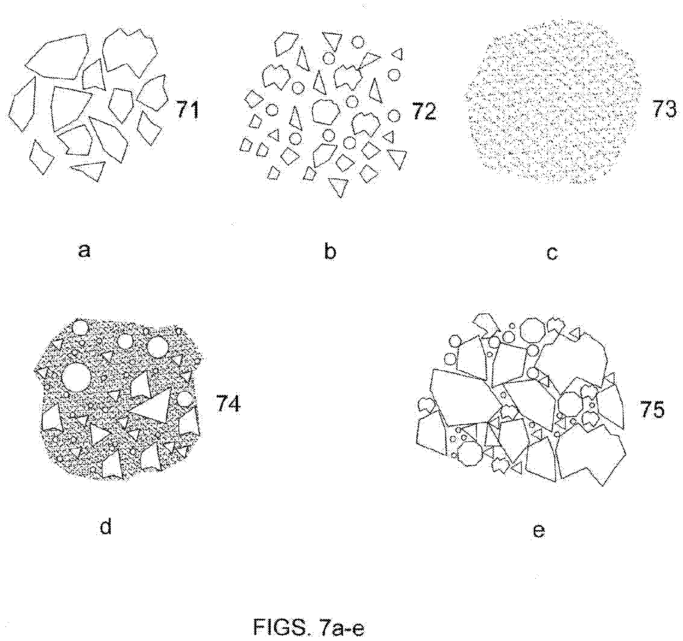

FIGS. **7*a-*7*e*** illustrate various shapes and comparative sizes of particles of organic and inorganic material **71, 72, 73**, that when combined, comprise an aggregate **74**. A greater proportion of larger particle sizes and shapes **75** of a sand aggregate comprised of American Society for Testing Materials (ASTM) C-33, or that which is provided by Pacific Aggregates Inc., Lake Elsinore, CA, at no less than 80% (±5) by volume is another embodiment of the present invention. The remaining 20% (±5) is to be comprised of a combination of an organic material such as peat moss, compost, coconut fiber (coir), or other organic matter, and/or water absorbing polymers often referred to as polyacrylamides such as SoilMoist™. This proportion of materials is expected to provide a porous growing media with greater moisture storage and oxygen holding capacity, and structural support for overlying pavement.

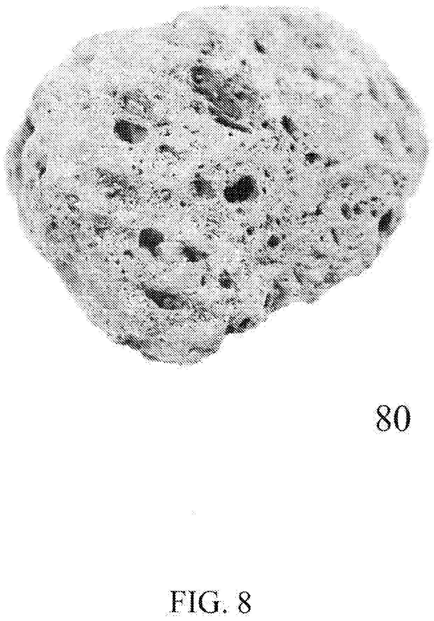

FIG. **8** is a photographic rendering of a ceramic material or reconstituted rock **80** such as expanded shale which is still another embodiment of the engineered media of the present invention.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below.

In the above description, numerous specific details are provided, such as the identification of various system components, to provide an understanding of embodiments of the invention. One skilled in the art will recognize, however, that embodiments of the invention can be practiced without one or more of the specific details, or with other methods, components, materials, etc.

The descriptions and drawings should be assumed as illustrative only of the principles of the invention. The invention may be configured in a variety of shapes and sizes and is not limited by the aforementioned dimensions, construction and operation of the identified parts, materials or embodiments.

While the previous description contains many specifics, these should not be construed as limitations on the scope of the invention, but as exemplifications of the presently preferred embodiments thereof. Thus, the scope of the invention should be determined by the appended claims. It is not desired to be limited to the exact details of construction shown and described for obvious modifications will occur to a person skilled in the art, without departing from the scope of the claims.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below.

## Claims

1. A plant frame and grate system (10) comprising
an open-bottomed frame (41, 52, 61) comprising four walls and a partially-opened top wall (7) capable of allowing vegetation to grow outward thereof and said vegetation's attended root system extends downward beyond the bottom edge of said frame (41, 52, 61);
further comprising a notch and a grate or plate (15, 52) positioned therein, supporting beams affixed to the interior of the frame (41, 52, 61) or lateral cross members, **characterized in that** the system further comprises electrical outlets (19);
a first waterproof conduit embedded into the frame (41, 52, 61) of the system through the interior of said system containing said electrical outlets (19) and extends upward from the interior of the system so as to be accessible to a user once the system is installed; and
a second waterproof conduit that is connected to said first waterproof conduit and that extends out from said system to a remote power source;
wherein said electrical outlets (19) provide power to said system so that decorative and/or aesthetically-pleasing devices may be incorporated into said system and/or onto vegetation planted in said system, and wherein said system further comprises a lock box by which to secure the accessible electrical outlets (19).

2. The plant frame and grate system according to claim 1, wherein said grate or plate (15, 52) is a polymer or metal-based fabricated grate or plate (15, 52) provided said grate or plate (15, 52) partially exposes the interior of the system to the atmosphere;
wherein when vegetation is planted within said system and said grate or plate (15, 52) is installed, said vegetation can grow upward vertically out of said system.

3. The plant frame and grate system according to claim 1, wherein said frame (41, 52, 61)_is comprised of a rigid and strong material selected from the group consisting of polymer, metal or concrete.

4. The plant frame and grate system according to claim 1, wherein said plant frame and grate system is installed into or adjacent to a pedestrian walking surface or paved area or a curb of a road or street (17) or in close proximity to an impervious surface (12) and further comprises an opening (31) that is wherein said opening (31) allows rain water to enter said plant frame and grate system, wherein said opening (31) is integrated or situated next to a pedestrian walking surface or paved area or a curb of a road or street (17) or an impervious surface (12).

5. The plant frame and grate system according to claim 1, wherein said system is circular in shape.

6. The plant frame and grate system according to claim 2, wherein said grate or plate (15, 52) covers the entire top surface of said plant frame (55) and grate system.

7. The plant frame and grate system according to claim 2, wherein said grate or said plate (15, 52) is positioned upon said supporting beams or lateral cross members wherein said grate or plate (15, 52) is even with the top surface of said frame (55) wherein when said grate or plate (15, 52) is installed in said notch, said plate (15, 52) and said frame (41, 52, 61) create a flat, even surface.

8. The plant frame and grate system according to claim 2, further comprising a recess in the top of said frame (55) wherein said recess may be fitted with pavers, step stones, gravel or decorative material wherein when said pavers, step stones, gravel or decorative material is installed an even, level surface is created with the grate or plate (15, 52), frame (41, 52, 61) and surrounding area.

9. The plant frame and grate system according to claim 1, further comprising a growing media (11) comprising a mixture of or discreet layers of both organic and inorganic growing material, wherein said media is engineered and blended in proportions that would support the adjoining pavement (12);
wherein said growing media stores oxygen which promotes vegetation growth in said system;
wherein said growing media is contained entirely in said system or extends beyond the bottom edges of the system into the surrounding environment; and
further wherein said media forms a sump wherein said sump collects rainwater emanating from the surrounding surface pavement (12); wherein said collected rainwater irrigates the vegetation planted in said system.

10. The plant frame and grate system according to claim 1, wherein said electrical outlets (19) provide power to spot lights directed onto the vegetation growing out of the system.

11. The plant frame and grate system according to claim 1, further comprising tubing or piping (21) embedded into the frame (41, 52, 61) of said system and extending outward from said system to a remote water supply; wherein said tubing or piping (21) provides supplemental irrigation to the vegetation planted in said system.

12. The plant frame and grate system according to claim 1, wherein said system is designed to allow the roots (8) of plants to be contained within the system and then be redirected outwards from the bottom edges of the system both horizontally and vertically from said bottom edges of the system into the surrounding environment; wherein said roots of plants (8) are prevented from growing upwards towards the surrounding surface pavement.

## Patentansprüche

1. Pflanzenrahmen- und Rostsystem (10), umfassend einen Rahmen mit offenem Boden (41, 52, 61), umfassend vier Wände und eine teilweise geöffnete obere Wand (7), die es der Vegetation ermöglichen kann, nach außen zu wachsen, und das gepflegte Wurzelsystem der Vegetation erstreckt sich nach unten über die Unterkante des Rahmens hinaus (41, 52, 61);
ferner umfassend eine Kerbe und ein Gitter oder eine Platte (15, 52), die darin positioniert sind, Stützbalken, die an der Innenseite des Rahmens (41, 52, 61) oder an seitlichen Querträgern angebracht sind, **gekennzeichnet dadurch, dass** das System ferner Steckdosen (19) umfasst;
eine erste wasserdichte Leitung, die in den Rahmen (41, 52, 61) des Systems durch das Innere des Systems eingebettet ist und die Steckdosen (19) enthält und sich vom Inneren des Systems nach oben erstreckt, um für einen Benutzer zugänglich zu sein, sobald das System installiert ist; und
eine zweite wasserdichte Leitung, die mit der ersten wasserdichten Leitung verbunden ist und sich von dem System zu einer entfernten Stromquelle erstreckt;
wobei die Steckdosen (19) das System mit Strom versorgen, so dass dekorative und/oder ästhetisch ansprechende Vorrichtungen in das System und/oder auf die in das System gepflanzte Vegetation eingebaut werden können, und wobei das System ferner einen Schließkasten umfasst, durch den die zugänglichen Steckdosen (19) gesichert werden.

2. Pflanzenrahmen- und Rostsystem nach Anspruch 1, wobei der Rost oder die Platte (15, 52) ein Rost oder eine Platte auf Polymer- oder Metallbasis (15, 52) ist, vorausgesetzt, der Rost oder die Platte (15, 52) setzt das Innere des Systems teilweise der Atmosphäre aus;
wobei, wenn Vegetation in das System gepflanzt wird und der Rost oder die Platte (15, 52) installiert ist, die Vegetation vertikal aus dem System nach oben wachsen kann.

3. Pflanzenrahmen- und Rostsystem nach Anspruch 1, wobei der Rahmen (41, 52, 61) aus einem starren und festen Material besteht, ausgewählt aus der Gruppe bestehend aus Polymer, Metall oder Beton.

4. Pflanzenrahmen- und Rostsystem nach Anspruch 1, wobei das Pflanzenrahmen- und Rostsystem in oder neben einer Fußgängerzone oder einem gepflasterten Bereich oder einem Bordstein einer Straße (17) oder in unmittelbarer Nähe einer undurchlässigen Oberfläche (12) installiert ist und ferner eine Öffnung (31) umfasst, d. h. wobei die Öffnung (31) das Eindringen von Regenwasser in den Pflanzenrahmen und das Rostsystem ermöglicht, wobei die Öffnung (31) in eine Fußgänger-Gehfläche oder einen gepflasterten Bereich oder einen Bordstein einer Straße (17) oder einer undurchlässigen Oberfläche (12) integriert ist oder sich daneben befindet.

5. Pflanzenrahmen- und Rostsystem nach Anspruch 1, wobei das System kreisförmig ist.

6. Pflanzenrahmen- und Rostsystem nach Anspruch 2, wobei der Rost oder die Platte (15, 52) die gesamte Oberseite des Pflanzenrahmen- (55) und Rostsystems bedeckt.

7. Pflanzenrahmen- und Rostsystem nach Anspruch 2, wobei der Rost oder die Platte (15, 52) auf den Stützbalken oder den seitlichen Querträgern positioniert ist, wobei der Rost oder die Platte (15, 52) eben mit der Oberseite des Rahmens ist (55), wobei, wenn der Rost oder die Platte (15, 52) in der Kerbe installiert ist, die Platte (15, 52) und der Rahmen (41, 52, 61) eine flache, ebene Oberfläche erzeugen.

8. Pflanzenrahmen- und Rostsystem nach Anspruch 2, ferner umfassend eine Aussparung in der Oberseite des Rahmens (55), wobei die Aussparung mit Pflastersteinen, Trittsteinen, Kies oder dekorativem Material versehen sein kann, wobei beim Installieren der Pflastersteine, der Trittsteine, des Kies oder des dekorativen Materials eine gleichmäßige, ebene Oberfläche mit dem Gitter oder der Platte (15, 52), dem Rahmen (41, 52, 61) und der Umgebung erzeugt wird.

9. Pflanzenrahmen- und Rostsystem nach Anspruch 1, ferner umfassend ein Wachstumsmedium (11), umfassend eine Mischung aus oder verschiedene Schichten von sowohl organischem als auch anorganischem Wachstumsmaterial, wobei das Medium in Anteilen konstruiert und gemischt ist, die den angrenzenden Bürgersteig (12) unterstützen;
wobei das Wachstumsmedium Sauerstoff speichert, der das Vegetationswachstum in dem System fördert;
wobei das Wachstumsmedium vollständig in dem System enthalten ist oder sich über die Unterkanten des Systems hinaus in die Umgebung erstreckt; und
ferner wobei das Medium einen Sumpf bildet, wobei der Sumpf Regenwasser sammelt, das von dem umgebenden Oberflächenbelag (12) ausgeht;
wobei das gesammelte Regenwasser die in das System gepflanzte Vegetation bewässert.

10. Pflanzenrahmen- und Rostsystem nach Anspruch 1, wobei die Steckdosen (19) Strom liefern, um Licht auf die aus dem System herauswachsende Vegetation zu richten.

11. Pflanzenrahmen- und Rostsystem nach Anspruch 1, ferner umfassend Rohre oder Rohrleitungen (21), die in den Rahmen (41, 52, 61) des Systems eingebettet sind und sich von dem System nach außen zu einer entfernten Wasserversorgung erstrecken;
wobei die Rohre oder Rohrleitungen (21) eine zusätzliche Bewässerung der in das System gepflanzten Vegetation bereitstellen.

12. Pflanzenrahmen- und Rostsystem nach Anspruch 1, wobei das System so ausgelegt ist, dass die Wurzeln (8) von Pflanzen im System enthalten sind und dann von den unteren Rändern des Systems horizontal und vertikal von den unteren Kanten des Systems in die Umgebung nach außen gerichtet werden;
wobei verhindert wird, dass die Wurzeln der Pflanzen (8) in Richtung des umgebenden Oberflächenpflasters nach oben wachsen.

## Revendications

1. Système de cadre et de grille pour plantes (10), comprenant un cadre à fond ouvert (41, 52, 61) comprenant quatre parois et une paroi supérieure partiellement ouverte (7) pouvant permettre à la végétation de pousser vers l'extérieur, et ledit système racinaire soigné de la végétation s'étend vers le bas au-delà du bord inférieur dudit cadre (41, 52, 61) ;
comprenant en outre une encoche et une grille ou une plaque (15, 52) positionnée à l'intérieur, supportant des montants fixés à l'intérieur du cadre (41, 52, 61) ou des traverses latérales, **caractérisé en ce que** le système comprend en outre des prises électriques (19) ;
un premier conduit étanche qui est encastré dans le cadre (41, 52, 61) du système à travers l'intérieur dudit système contenant lesdites prises électriques (19), et qui s'étend vers le haut depuis l'intérieur du système afin d'être accessible à un utilisateur une fois le système installé ; et
un second conduit étanche qui est relié audit premier conduit étanche et qui s'étend depuis ledit système jusqu'à une source d'alimentation à distance ;
lesdites prises électriques (19) fournissant de l'énergie audit système de sorte que des dispositifs décoratifs et/ou attrayants visuellement puissent être incorporés dans ledit système et/ou sur la végétation plantée dans ledit système, et ledit système comprenant en outre une boîte de verrouillage permettant de sécuriser les prises électriques accessibles (19).

2. Système de cadre et de grille pour plantes selon la revendication 1, dans lequel ladite grille ou plaque (15, 52) est une grille ou une plaque fabriquée à base de polymère ou de métal (15, 52), à condition que ladite grille ou plaque (15, 52) expose partiellement l'intérieur du système à l'atmosphère ;
ladite végétation pouvant pousser en hauteur verticalement hors dudit système lorsqu'elle est plantée dans ledit système et que ladite grille ou plaque (15, 52) est installée.

3. Système de cadre et de grille pour plantes selon la revendication 1, dans lequel ledit cadre (41, 52, 61) est composé d'un matériau rigide et résistant choisi dans le groupe constitué par le polymère, le métal ou le béton.

4. Système de cadre et de grille pour plantes selon la revendication 1, ledit système de cadre et de grille pour plantes étant installé dans une surface piétonnière ou une zone pavée ou à la bordure d'une route ou d'une rue (17) ou étant adjacent à ceux-ci, ou étant installé à proximité immédiate d'une surface imperméable (12) et comprenant en outre une ouverture (31), ladite ouverture (31) permettant à l'eau de pluie de pénétrer dans ledit système de cadre et de grille pour plantes, ladite ouverture (31) étant intégrée ou située à côté d'une surface piétonnière ou d'une zone pavée ou d'une bordure de route ou de rue (17) ou d'une surface imperméable (12).

5. Système de cadre et de grille pour plantes selon la revendication 1, dans lequel ledit système est de forme circulaire.

6. Système de cadre et de grille pour plantes selon la revendication 2, dans lequel ladite grille ou plaque (15, 52) recouvre toute la surface supérieure dudit cadre pour plantes (55) et système de grille.

7. Système de cadre et de grille pour plantes selon la revendication 2, dans lequel ladite grille ou ladite plaque (15, 52) est positionnée sur lesdits montants de support ou traverses latérales, ladite grille ou plaque (15, 52) étant au même niveau que la surface supérieure dudit cadre (55), ladite plaque (15, 52) et ledit cadre (41, 52, 61) créant une surface plane et régulière lorsque ladite grille ou plaque (15, 52) est installée dans ladite encoche.

8. Système de cadre et de grille pour plantes selon la revendication 2, comprenant en outre un évidement dans la partie supérieure dudit cadre (55), ledit évidement pouvant être pourvu de pavés, de marches en pierre, de gravier ou d'un matériau décoratif, une surface plane et uniforme étant créée avec la grille ou la plaque (15, 52), le cadre (41, 52, 61) et la zone environnante lorsque lesdits pavés, lesdites marches, ledit gravier ou matériau décoratif est/sont installé(s).

9. Système de cadre et de grille pour plantes selon la revendication 1, comprenant en outre un milieu de culture (11) comprenant un mélange de matériaux de culture organique et inorganique ou des couches discrètes de ceux-ci, ledit milieu étant conçu et mélangé dans des proportions qui supporteraient la chaussée adjacente (12) ;
ledit milieu de culture stockant de l'oxygène qui favorise le développement de la végétation dans ledit système ;
ledit milieu de culture étant entièrement contenu dans ledit système ou s'étendant au-delà des bords inférieurs du système dans l'environnement ; et
ledit milieu formant en outre un puisard, ledit puisard collectant l'eau de pluie émanant de la chaussée de surface environnante (12) ;
ladite eau de pluie collectée irriguant la végétation plantée dans ledit système.

10. Système de cadre et de grille pour plantes selon la revendication 1, dans lequel lesdites prises électriques (19) fournissent de l'énergie à des projecteurs dirigés sur la végétation poussant hors du système.

11. Système de cadre et de grille pour plantes selon la revendication 1, comprenant en outre des tubes ou des tuyaux (21) encastrés dans le cadre (41, 52, 61) dudit système et s'étendant vers l'extérieur, dudit système jusqu'à une alimentation en eau à distance ;
lesdits tubes ou tuyaux (21) fournissant une irrigation supplémentaire à la végétation plantée dans ledit système.

12. Système de cadre et de grille pour plantes selon la revendication 1, dans lequel ledit système est conçu pour permettre aux racines (8) de plantes d'être contenues dans le système et ensuite d'être redirigées vers l'extérieur à partir des bords inférieurs du système à la fois horizontalement et verticalement desdits bords inférieurs du système dans l'environnement ;
lesdites racines de plantes (8) ne pouvant pas pousser en hauteur en direction de la chaussée de surface environnante.
